# EUROPEAN PATENT SPECIFICATION

(11) **EP 4 057 603 B1**
(45) Date of publication and mention of the grant of the patent: **06.11.2024**
(21) Application number: 20898519.2
(22) Date of filing: 20.11.2020
(51) Int. Cl.: H04M 3/42, H04Q 3/58, H04M 1/00, H04M 3/38

(54) **TELEPHONE SWITCHING DEVICE, TELEPHONE TERMINAL, TELEPHONE SWITCHING SYSTEM, METHOD FOR CONTROLLING TELEPHONE SWITCHING DEVICE, AND CONTROL PROGRAM**
TELEFONVERMITTLUNGSVORRICHTUNG, TELEFONENDGERÄT, TELEFONVERMITTLUNGSSYSTEM, VERFAHREN ZUM STEUERN EINER TELEFONVERMITTLUNGSVORRICHTUNG UND STEUERPROGRAMM
DISPOSITIF ET SYSTÈME DE COMMUTATION TÉLÉPHONIQUE, TERMINAL TÉLÉPHONIQUE, PROCÉDÉ DE COMMANDE DE DISPOSITIF DE COMMUTATION TÉLÉPHONIQUE ET PROGRAMME DE COMMANDE

(30) Priority: 12.12.2019 JP 2019224566
(43) Date of publication of application: 14.09.2022
(73) Proprietor: NEC Platforms, Ltd., Kanagawa 213-8511 (JP)
(72) Inventor: KIMATA Shinobu, Kawasaki-shi, Kanagawa 213-8511 (JP)
(74) Representative: Vossius & Partner Patentanwälte Rechtsanwälte mbB
(86) International application number: PCT/JP2020/043526
(87) International publication number: WO 2021/117472

(56) References cited:
- JP-A- 2007 123 971
- JP-A- 2009 302 997
- JP-A- H03 289 749
- JP-A- H04 180 495
- JP-A- H08 191 467
- JP-A- H11 234 410
- US-A1- 2007 036 298

## Description

### Technical Field

The present invention relates to a telephone switching device, a telephone terminal, a telephone switching system, a method for controlling the telephone switching device, and a control program.

### Background Art

A telephone exchange such as a private branch exchange (PBX) accommodates a plurality of telephones, and an extension number to be used in each telephone is set. Such setting needs to be performed according to an environment of an office in which the telephones are installed. For example, in a free address office employing a free address, it is desirable to set an extension number flexibly.

As related arts, for example, Patent Literatures 1 to 3 are known. Patent Literature 1 describes that, in an IP telephone system for a free address office, by logging in to a telephone installed on a desk, it is possible to temporarily use the telephone as one's own telephone.

Further, Patent Literature 2 describes that, in a telephone system having a personal authentication function, a telephone on a calling side performs user authentication and transmits identification information of a caller to a telephone on a receiving side, and the telephone on the receiving side displays the identification information of the caller being received from the telephone on the calling side. Patent Literature 3 describes that, in a telephone system, a plurality of extension numbers each used by each of a plurality of users are assigned to an extension telephone, and when a call is received, a user name associated to a destination extension number is audio-output.

JP H03 289749 A and US 2007/036298 A1 are documents of the related art.

### Citation List

### Patent Literature

[Patent Literature 1] Japanese Unexamined Patent Application No. 2007-142621
[Patent Literature 2] Japanese Unexamined Patent Application No. 2006-174109
[Patent Literature 3] Japanese Unexamined Patent Application No. H08-191467

### Summary of Invention

### Technical Problem

In Patent Literature 1, a telephone installed on a desk of a free address office can be temporarily used as one's own telephone. However, in the free address office, the number of telephones installed on the desks may be smaller than the number of seats, but in Patent Literature 1, such a case is not considered.

For this reason, in a related art as in Patent Literature 1, when there are more users than the number of installed telephones, there is a possibility that not all users can use the telephones. Therefore, in the related art, there is a problem that it may be difficult for a plurality of users each to flexibly use one telephone (telephone terminal).

In view of the above problem, an object of the present disclosure is to provide a telephone switching device, a telephone terminal, a telephone switching system, a method for controlling the telephone switching device, and a control program that enable a plurality of users to flexibly use one telephone terminal.

### Solution to Problem

The invention is specified by the independent claims. Preferred embodiments are defined in the dependent claims. table.

### Advantageous Effects of Invention

According to the present disclosure, it is possible to provide a telephone switching device, a telephone terminal, a telephone switching system, a method for controlling the telephone switching device, and a control program that enable a plurality of users to flexibly use one telephone terminal.

### Brief Description of the Drawings

[Fig. 1] Fig. 1 is a configuration diagram illustrating an outline of a telephone switching system according to an example embodiment.
[Fig. 2] Fig. 2 is a configuration diagram illustrating an outline of a telephone switching device according to the example embodiment.
[Fig. 3] Fig. 3 is a configuration diagram illustrating an outline of a telephone terminal according to the example embodiment.
[Fig. 4] Fig. 4 is a configuration diagram illustrating a configuration example of a telephone switching system according to a first example embodiment.
[Fig. 5] Fig. 5 is a diagram illustrating an example of a registration table according to the first example embodiment.
[Fig. 6] Fig. 6 is a sequence diagram illustrating a registration operation of the telephone switching system according to the first example embodiment.
[Fig. 7] Fig. 7 is a sequence diagram illustrating an incoming call operation of the telephone switching system according to the first example embodiment.
[Fig. 8] Fig. 8 is a sequence diagram illustrating a call origination operation of the telephone switching system according to the first example embodiment.

### Description of Embodiments

### (Examination Leading to Embodiments)

Currently, as part of work style reform, companies are introducing a telework system that enables a flexible work style that is not restricted by place and time, and a free address system that does not require fixed seats, and is trying to improve productivity, work efficiency, and work-life balance of each employee.

Satellite office work in teleworking allows workers to work at a different place from their original place of work, and office styles such as free address allow each employee to work at a freely selected seat rather than at a fixed seat that is predesignated.

One of challenges in such a work style is to ensure a means of communication between employees and customers.

There are various means of communication, such as chat, e-mail, and Web conferencing, as a means of communication between employees and customers. Among these means, voice communication by telephone has already been introduced by many companies, and voice communication by telephone is an indispensable means of communication because it enables real-time communication. However, when a mobile device such as a mobile phone or smartphone is distributed to each employee for voice communication, there is a problem that a communication cost of a company becomes large. In addition, there is a system called Bring Your Own Device (BYOD) in which private smart devices owned by individuals are used for business, but it is difficult to introduce this system easily because it requires companies to take security measures against information leakage and the like.

Therefore, the inventor has examined a system using a telephone exchange accommodating a multi-function telephone in order to secure a communication means capable of coping with such an increasingly diverse office environment. However, in order to change data of a telephone exchange, work by a person in charge of installation who specializes in such work is necessary, and there is a problem that real-time performance and flexibility are lacking.

For example, even when the number of shared telephones installed in a free address office is smaller than the number of users, it is necessary that all the users can use the installed shared telephones as their own dedicated telephones. In Patent Literature 1, in a free address office in which the number of installed telephones is small compared to the number of seats, there may be a user who cannot use a telephone when the number of users who are present is more than the number of installed telephones. Further, in Patent Literatures 2 and 3, it is not possible for a plurality of persons to jointly use one shared telephone by simultaneously personal-authenticating on the one shared telephone.

Therefore, in the following example embodiment, to enable one telephone to be shared by an unspecified number of users, data of a telephone exchange are automatically changed while security is ensured, and thereby flexible change of line information accommodated in a multi-function telephone is enabled.

### (Summary of Embodiments)

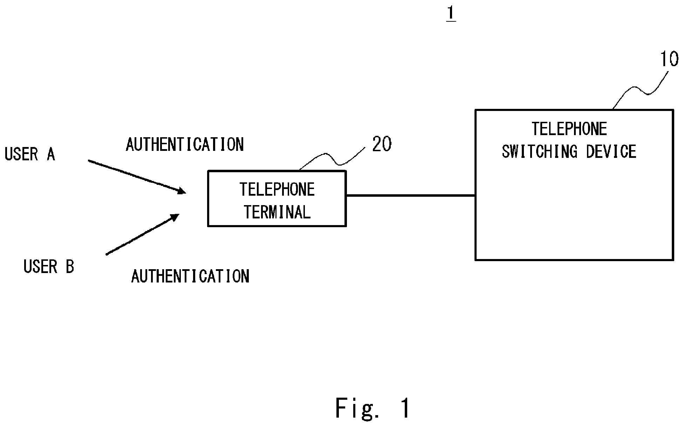

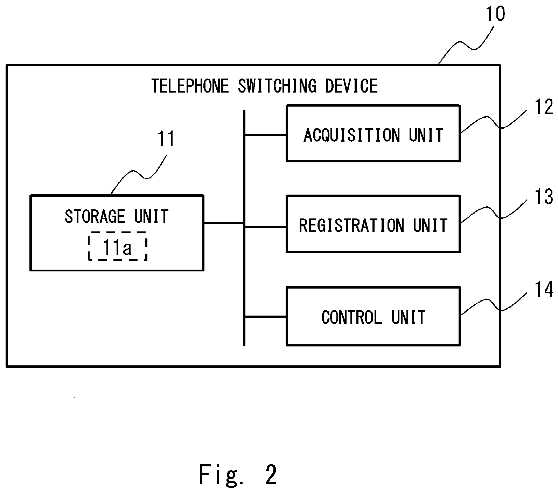

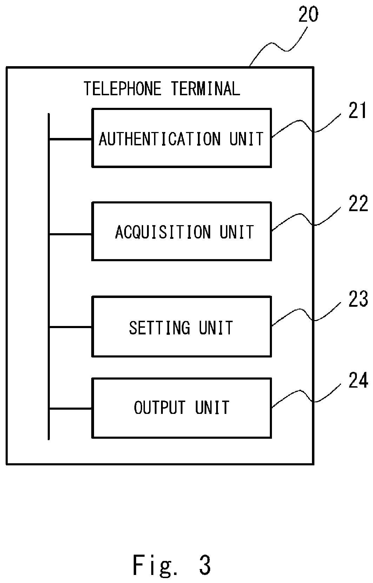

Fig. 1 illustrates an outline of a telephone switching system according to an example embodiment, Fig. 2 illustrates an outline of a telephone switching device according to the example embodiment, and Fig. 3 illustrates an outline of a telephone terminal according to the example embodiment. As illustrated in Fig. 1, a telephone switching system 1 according to the example embodiment includes a telephone switching device 10 and a telephone terminal 20 which are connected to each other in such a way as to be able to communicate with each other. The telephone terminal 20 can be shared by a plurality of users such as a user A and a user B through authentication.

As illustrated in Fig. 2, the telephone switching device 10 includes a storage unit 11, an acquisition unit 12, a registration unit 13, and a control unit 14. The storage unit 11 stores a registration table 11a for registering a plurality of personal telephone numbers (extension numbers) for each telephone terminal 20. The acquisition unit 12 acquires an authentication result of a user with respect to the telephone terminal 20. The registration unit 13 registers the telephone terminal 20 and a personal telephone number of the user in the registration table 11a in association with each other, in accordance with the acquired authentication result. The control unit 14 controls outgoing/incoming calls using the user's personal telephone number at the telephone terminal 20, based on the registered registration table.

As illustrated in Fig. 3, the telephone terminal 20 includes an authentication unit 21, an acquisition unit 22, a setting unit 23, and an output unit 24 in order to enable sharing by a plurality of users. The authentication unit 21 makes an authentication request to, for example, the telephone switching device 10 or the like that executes authentication processing, based on input authentication information of a user. The acquisition unit 22 acquires an authentication result in response to the authentication request and a personal telephone number of the user from, for example, the telephone switching device 10 that registers a personal telephone number in accordance with an authentication result. The setting unit 23 sets an incoming call output operation for each of a plurality of personal telephone numbers including the acquired personal telephone number. The output unit 24 performs an incoming call output operation according to an incoming personal telephone number, based on the set incoming call output operation.

As described above, in the example embodiment, since the telephone terminal and the personal telephone number (extension number) of the user are automatically registered in association with each other according to the authentication result of the user with respect to the telephone terminal, even when the number of users is larger than the number of shared telephones installed in the free address office, all the users can simultaneously use the shared telephone in the same way as their own dedicated telephones.

Specifically, according to the example embodiment, by installing a multi-function telephone having a function for performing personal authentication in a satellite office or a free address floor and realizing a means for flexibly and automatically changing a sub-line (extension number) accommodated in the multi-function telephone, it is possible to secure a means of voice communication while securing security and mobility of a user not only when the multi-function telephone is used by one user but also when the multi-function telephone is shared by a plurality of users.

### (First example embodiment)

Hereinafter, a first example embodiment will be described with reference to the drawings. First, a configuration of a telephone switching system according to the present example embodiment will be described.

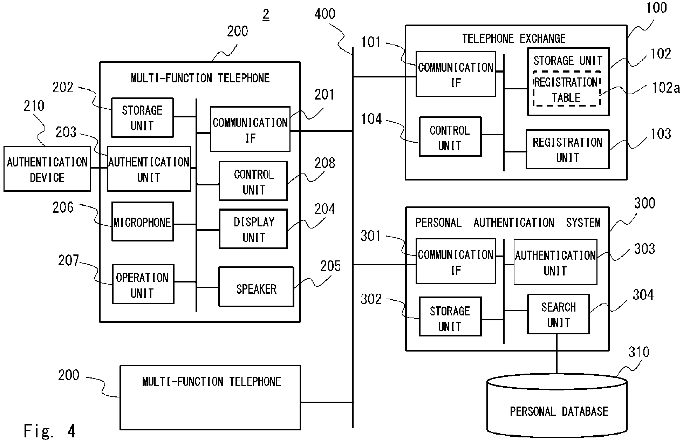

Fig. 4 illustrates a configuration example of a telephone switching system 2 according to the present example embodiment. As illustrated in Fig. 4, the telephone exchange system 2 includes a telephone exchange 100, a plurality of multi-function telephones 200, a personal authentication system 300, and a personal database 310. Note that the configuration in Fig. 4 is an example, and any other configuration may be used as long as an operation according to the present example embodiment described later is possible.

In the telephone switching system 2, the telephone switching apparatus 100 accommodates the multi-function telephone 200 that uses a plurality of extension numbers, and the multi-function telephone 200 is enabled to be shared by a plurality of users by using personal authentication. In order to achieve such sharing, the multi-function telephone 200 has a function for performing personal authentication of a user, the personal authentication system 300 has a function such as biometric authentication of a user, the personal database 310 manages an extension number for a user to be authenticated, and the telephone exchange 100 has an interface that enables change of telephone data (registered data) from the personal authentication system 300.

The telephone exchange 100, the plurality of multi-function telephones 200, and the personal authentication system 300 are communicably connected via a network 400 such as a local area network (LAN). The personal database 310 may be connected to the personal authentication system 300 directly or via a LAN 400.

The multi-function telephone 200 is an extension telephone installed in a satellite office, a free address floor, a conference room, or the like, and is a shared telephone that can be shared by a plurality of users. When a plurality of users perform personal authentication on one multi-function telephone 200 and succeed in the authentication, each of the plurality of users is able to use the one multi-function telephone 200 as a personal dedicated telephone. Functions of the dedicated telephone include a call using a personal telephone number, setting of a one-touch button for a person, and the like.

The multi-function telephone 200 includes an authentication device 210 for inputting authentication data necessary for personal authentication of a plurality of users. The authentication device 210 is, for example, an ID/password input means for ID/password authentication, an IC card reader for IC card authentication (employee ID card authentication), a camera for face authentication, or another biometric information input means for biometric authentication. The authentication device 210 may be a device external to the multi-function telephone 200, or may be an internal device of the multi-function telephone 200.

The multi-function telephone 200 includes, for example, a communication interface (IF) 201, a storage unit 202, an authentication unit 203, a display unit 204, a speaker 205, a microphone 206, an operation unit 207, and a control unit 208 in order to achieve personal authentication and functions necessary for a shared telephone.

The communication IF 201 is a communication unit that communicates with the telephone exchange 100 and the personal authentication system 300 via the network 400. For example, the communication IF 201 transmits/receives data and a message related to personal authentication to/from the personal authentication system 300, and transmits/receives data and messages related to outgoing/incoming calls and a call to/from the telephone exchange 100.

The storage unit 202 stores data necessary for an operation of the multi-function telephone 200. For example, the storage unit 202 stores identification information (unique data) of the multi-function telephone 200, information such as an extension number of a plurality of users who have succeeded in personal authentication, a ringtone and an incoming call lamp, which are different for each extension number, and stores information for personal authentication (collation data associated with an extension number), and the like, as necessary. It can also be said that the storage unit 202 is a setting unit for setting personal setting information such as an incoming call output operation of each of a plurality of extension numbers, a one-touch button, and a telephone directory. The personal setting information for each extension number may be set in advance in the storage unit 202, or may be set in accordance with an operation and the like of a user registered when a registration result is acquired from the telephone exchange 100. It can also be said that the display unit 204 and the speaker 205 are output units that perform different incoming call output operations for each incoming extension number, based on personal setting information in the storage unit 202.

The authentication unit 203 executes processing necessary for personal authentication of a plurality of users. For example, the authentication unit 203 acquires authentication data (ID/password information, IC card information, face image information, another type of biometric information, and the like.) input by a user via the authentication device 210, and transmits the acquired authentication data and identification information of the multi-function telephone 200 to the personal authentication system 300 via the communication IF 201 and the network 400 (performs an authentication request). In addition, the authentication unit 203 performs authentication processing for identifying a user as necessary when a call is made or received. The authentication unit 203 may identify an originating extension number, according to an authentication result of a user who performs a calling operation.

The display unit 204 displays necessary information when a call is made/received and during a call. The display unit 204 displays an originating extension number (external line number), name of a caller, a destinating extension number (external line number), name of a callee, and the like when a call is made or received. It is preferable that the display unit 204 provides different display for each user's extension number to be used. For example, when a call is received, the display unit 204 performs display by using a display method (such as a color or blinking of an incoming call lamp) assigned to an incoming extension number.

The speaker 205 outputs voice or the like when a call is made/ received and during a call. The speaker 205 preferably outputs different sounds for each user's extension number to be used. For example, when a call is received, the speaker 205 sounds with a ringtone assigned to an extension number being called. The microphone 206 is used by a user to input voice during a call. The operation unit 207 is a button, a touch panel, or the like, and receives a user operation necessary for personal authentication and making/receiving a call. The control unit 208 is a control unit that controls an operation of each unit of the multi-function telephone 200. For example, the control unit (acquisition unit) 208 acquires an authentication result and an extension number (registration result) of an authenticated user from the telephone exchange 100, and controls call origination/reception operations and a call operation for each user by using the acquired extension number.

The personal authentication system 300 is an authentication device that executes personal authentication processing of a plurality of users using the multi-function telephone 200. The personal authentication system 300 may be provided inside the telephone exchange 100. The personal authentication system 300 includes, for example, a communication IF 301, a storage unit 302, an authentication unit 303, and a search unit 304 in order to achieve functions necessary for executing personal authentication processing.

The communication IF 301 is a communication unit that performs communication with the multi-function telephone 200 and the telephone exchange 100 via the network 400. For example, the communication IF 301 transmits/receives data and a message related to personal authentication to/from the multi-function telephone 200, and transmits/receives data and a message related to an extension number of the multi-function telephone 200 to/from the telephone exchange 100.

The storage unit 302 stores data necessary for an operation of the personal authentication system 300. For example, the storage unit 302 stores verification data for personal authentication and personal data (personal identification information) for identifying a person in association with each other.

The authentication unit 303 receives data and the like necessary for personal authentication of a plurality of users from the multi-function telephone 200 via the communication IF 301 and the network 400, and performs personal authentication processing. The personal authentication processing is ID/password authentication processing for authenticating a user by using ID/password information, IC card authentication processing for authenticating a user by using IC card information, face authentication processing for authenticating a user by using face image information, biometric authentication processing for authenticating a user by using another type of biometric information such as a fingerprint, or the like. The authentication unit 303 refers to collation data in the storage unit 302, and authenticates and identifies a person, based on authentication data acquired through the multi-function telephone 200. Specifically, when the authentication succeeds, a person can be identified, based on personal data associated with verification data that match authentication data of a user.

The searching unit 304 refers to the personal database 310, and searches for extension numbers and the like (authentication results) of a plurality of successfully authenticated users. The personal database (extension number database) 310 stores personal data and extension numbers (extension number information) in association with each other. In cooperation with the personal database 310, the search unit 304 acquires an extension number associated with a person identified by the authentication processing, and transmits the identified extension number and the identification information of the multi-function telephone 200 to the telephone exchange 100 via the communication IF 301 and the network 400. It can also be said that the search unit 304 is a conversion processing unit that converts personal data of a user who has been successfully authenticated into an extension number.

The telephone exchange 100 is a PBX or the like, and is a telephone switching device that accommodates a plurality of multi-function telephones 200 and registers an extension number of the accommodated multi-function telephone 200. The telephone exchange 100 includes, for example, a communication IF 101, a storage unit 102, a registration unit 103, and a control unit 104 in order to achieve registration of an extension number and functions necessary for the telephone switching device.

The communication IF 101 is a communication unit that communicates with the multi-function telephone 200 and the personal authentication system 300 via the network 400. For example, the communication IF 101 transmits/receives data and a message related to an extension number of the multifunction telephone 200 to/from the personal authentication system 300, and transmits/receives data and a message related to outgoing/incoming calls and a call to/from the multi-function telephone 200.

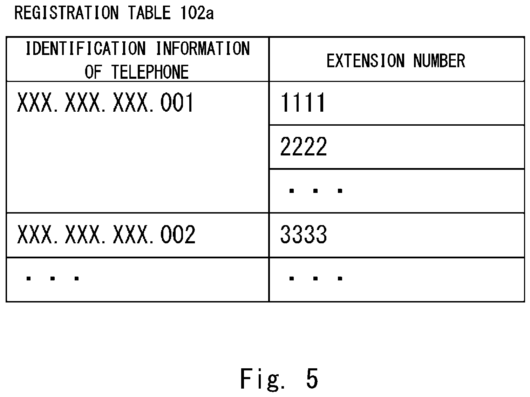

The storage unit 102 stores data necessary for an operation of the telephone exchange 100. For example, the storage unit 102 stores a registration table 102a for registering a plurality of extension numbers (sub-lines) for each of the multi-function telephones 200. Fig. 5 illustrates an example of the registration table 102a registered in the storage unit 102. As illustrated in Fig. 5, the registration table 102a stores identification information of the multi-function telephone 200 and an extension number of a user who uses the multi-function telephone 200 in association with each other. The identification information of a telephone is any identification information capable of identifying the multi-function telephone set 200, and is, for example, an IP address or the like. In the example in Fig. 5, registration is performed in such a way that extension numbers "1111" and "2222" can be used in a telephone with identification information "XXX.XXX.XXX.001" and extension number "3333" can be used in a telephone with identification information "XXX.XXX.XXX.002".

The registration unit 103 receives an extension number and the like from the personal authentication system 300 via the communication IF 101 and the network 400. It can also be said that the registration unit 103 is an acquisition unit for acquiring an authentication result (extension number and the like) of a user with respect to the multi-function telephone 200. The registration unit 103 receives extension numbers of a plurality of successfully authenticated users and identification information of the multi-function telephone 200, and automatically registers (adds), in the registration table 102a, the plurality of extension numbers received as sub-lines of the multi-function telephone 200 from these pieces of information. When a user performs a registration deletion operation of the user's own extension number on the multi-function telephone 200, the registration unit 103 deletes the extension number from the registration table 102a (cancels a sub-line setting). As a method of canceling sub-line registration, instead of a user himself/herself performing a cancel operation, a data setting of an original multi-function telephone may be changed when the user performs personal authentication with another multi-function telephone and performs sub-line registration.

The control unit 104 is a control unit that controls an operation of each unit of the telephone exchange 100, and controls outgoing/incoming calls and a call for each extension number of the multi-function telephone 200, based on, for example, the registration table 102a. The control unit 104 refers to the registration table 102a and performs control in such a way as that an incoming call to a registered extension number is received by the multi-function telephone 200.

With the configuration as illustrated in Fig. 4, a caller can make a call by dialing the same extension number without being aware of a location (a satellite office, a free address floor, a conference room, and the like) of a person who the caller wishes to call, therefore voice communication with the person can be ensured.

Next, an operation of the telephone switching system according to the present example embodiment will be described. Although registration and outgoing/incoming call by one user will be described below, in the present example embodiment, a plurality of sub-lines (extension numbers) can be accommodated in a multi-function telephone, and by performing the following operation for a plurality of users, one multi-function telephone can be shared and used.

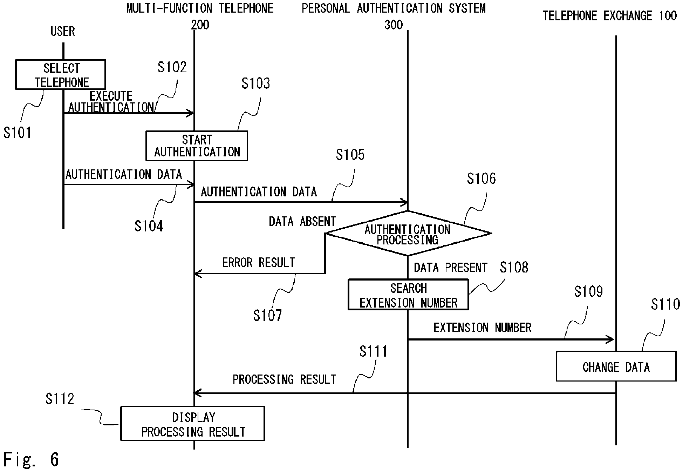

Fig. 6 illustrates a flow of a registration operation of the telephone switching system 2 according to the present example embodiment. As illustrated in Fig. 6, first, a user selects, for example, the multi-function telephone 200 installed closest to a work place (S101), and executes personal authentication by operating the authentication device 210 of the selected multi-function telephone 200 (S102). Then, the authentication unit 203 of the multi-function telephone 200 starts authentication processing (S103), acquires authentication data input to the authentication device 210 (S104), and transmits the acquired authentication data and identification information (for example, "XXX.XXX.XXX.001") of the multi-function telephone 200 to the personal authentication system 300 (S105).

Next, the authentication unit 303 of the personal authentication system 300 performs authentication processing (S106). The authentication unit 303 collates the authentication data received from the multi-function telephone 200 with collation data registered in advance in the storage unit 302, and identifies a person. At this occasion, when there is no collation data in the storage unit 202 that match the authentication data, i.e., when the person cannot be identified, it is determined that an authentication error has occurred, and an error result is transmitted to the multi-function telephone 200 (S107), and the processing is suspended.

On the other hand, when the collation data matching the authentication data exist in the storage unit 202, specifically, when the person is identified, the search unit 304 executes search processing (S108). For example, the search unit 304 transmits an authentication result of the user (personal data corresponding to the collation data) to the personal database 310, and collates, from the personal database 310 storing an extension number associated with each person, the extension number associated with the personal data. The personal database 310 returns am extension number search result of the user (the extension number associated with the personal data) to the personal authentication system 300. The search unit 304 transmits the extension number (e.g., "1111") included in the returned result to the telephone exchange 100 together with the identification information of the multi-function telephone 200 requiring data change (S109).

Next, the registration unit 103 of the telephone exchange 100 executes data change processing of the multi-function telephone 200 (S110). The registration unit 103 changes, in the registration table 102a, sub-line data (extension number) of the multi-function telephone 200. For example, when the identification information "XXX.XXX.XXX.001" and the extension number "1111" of the multi-function telephone 200 are received, the identification information "XXX.XXX.XXX.001" and the extension number "1111" are associated with each other and registered in the registration table 102a as illustrated in Fig. 5. Further, the registration unit 103 transmits processing results (authentication result and data setting result) to the multi-function telephone 200 (S111). Then, the control unit 208 of the multi-function telephone 200 acquires the authentication result and the data setting result of the telephone exchange 100, and the display unit 204 displays the acquired results to the user (S112). Thereafter, an incoming call addressed to the user is sent to the multi-function telephone 200 of which data setting is performed according to this procedure.

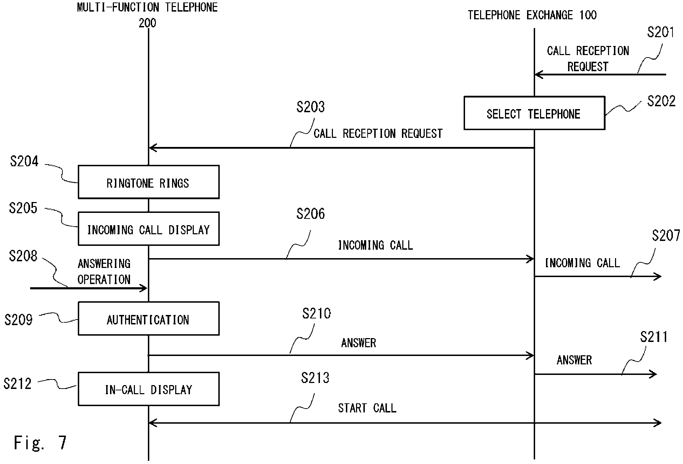

Fig. 7 illustrates operation of the telephone switching system according to the present example embodiment, and illustrates an incoming call operation after the registration operation in Fig. 6 is completed.

As illustrated in Fig. 7, first, when a call origination operation for a destinating extension number is performed in an originating telephone, the telephone exchange 100 receives a call reception request message for the extension number of the destinating destination (for example, "111 1") from the originating telephone (S201). The originating telephone may be a telephone accommodated in the telephone exchange 100 or a telephone on an external network. Specifically, a telephone number of the originating telephone may be an extension number or an external number.

When the call reception request message is received, the control unit 104 of the telephone exchange 100 refers to the registration table 102a, selects the multi-function telephone 200 (for example, the telephone having the identification information "XXX.XXX.XXX.001") associated with the destinating extension number included in the received call reception request message (S202), and transmits the call reception request message to the selected multi-function telephone 200 (S203).

Subsequently, when the call reception request message is received from the telephone exchange 100, the control unit 208 of the multi-function telephone 200 performs an incoming call operation according to the destinating extension number included in the received call reception request message. For example, a ringtone relevant to the destinating extension number is sounded from the speaker 205 (S204) and the destinating extension number and an incoming call lump is displayed on the display unit 204 (S205), based on information on the ringtone and the incoming call lump relevant to the extension number, which is registered in the storage unit 202 in advance.

By making it possible to set different ringtones and incoming call lamps for each extension number (sub-line) in the multi-function telephone 200, it is possible to determine which user a call is addressed, based on a ringtone and an incoming call lamp, even in a case in which the multi-function telephone 200 is shared by a plurality of users. As a result, it is not necessary to prepare a multi-function telephone or a mobile device for each person, and it is possible to construct an efficient telephone system with a reduced running cost.

Further, the control unit 208 of the multi-function telephone 200 returns an incoming call message for the originating telephone to the telephone exchange 100 (S206). The incoming call message includes the destinating extension number (e.g., "1111"). Further, the control unit 104 of the telephone exchange 100 transmits the returned incoming call message to the originating telephone (S207).

Subsequently, the user performs an answer operation on the operation unit 207 of the multi-function telephone 200 (S208). At this occasion, authentication processing is performed in order to identify the user who performs the answer operation (S209). This authentication processing may be executed by the authentication unit 203 of the multi-function telephone 200, or may be executed by requesting the personal authentication system 300 to perform authentication. The authentication succeeds when the authentication data of the user input to the authentication device 210 match collation data of the user of the incoming extension number. When another user who is present answers the call on behalf of the user, the authentication processing may be omitted and the another user may answer the call.

When the authentication is successful, the control unit 208 of the multi-function telephone 200 transmits an answer message for the originating telephone to the telephone exchange 100 (S210). The answer message includes the extension number of the destinating extension number (e.g., "1111"). Further, the control unit 104 of the telephone exchange 100 transmits the received answer message to the originating telephone (S211). As a result, communication (call) is enabled, and therefore the control unit 208 of the multi-function telephone 200 displays, on the display unit 204, the extension number with which the communication is enabled (S212), and the communication using the microphone 206 and the speaker 205 with the originating telephone is initiated(S213).

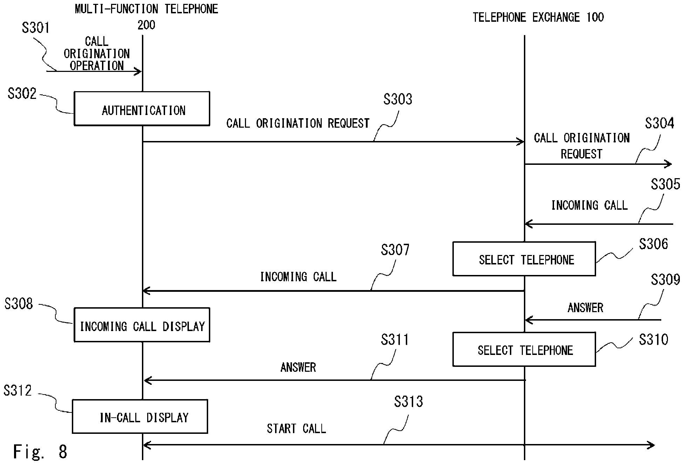

Fig. 8 illustrates an operation of the telephone switching system according to the present example embodiment, and illustrates a call origination operation after the registration operation in Fig. 6 is completed.

As illustrated in Fig. 8, first, the user performs a call origination operation for the destination telephone on the operation unit 207 of the multi-function telephone 200 (S301). At this occasion, authentication processing is performed in order to identify the user who performs the call origination operation (S302). This authentication processing may be executed by the authentication unit 203 of the multi-function telephone 200, or may be executed by requesting the personal authentication system 300 to perform authentication from the. The authentication succeeds when the authentication data of the user input to the authentication device 210 match the verification data of the user using the multi-function telephone 200, and the user and the extension number to be used are identified.

For example, data of a telephone directory used by the identified user may be displayed on the display unit 204 of the multi-function telephone 200, or a one-touch button for the identified user may be used. In a case in which another user who is present originates a call on behalf of the user, the authentication processing may be omitted and the another user may select an originating extension number. A destinating telephone may be a telephone accommodated in the telephone exchange 100 or a telephone on an external network. Specifically, a telephone number of the destinating telephone may be an extension number or an external number.

When the authentication is successful, the control unit 208 of the multi-function telephone 200 transmits a call origination request message for the destinating telephone to the telephone exchange 100 (S303). The call origination request message includes a telephone number of the destinating telephone input by the user and the originating extension number (e.g., "1111") of the user identified by the authentication. Further, the control unit 104 of the telephone exchange 100 transmits the received call origination request message to the destinating telephone (S304).

Next, the telephone exchange 100 receives an incoming call message for the extension number of the originating multi-function telephone 200 from the destinating telephone (S305). Then, similarly to S202 in the case of the incoming call, the control unit 104 of the telephone exchange 100 refers to the registration table 102a, selects the multi-function telephone 200 (for example, the telephone having the identification information "XXX.XXX.XXX.001 ") associated with the originating extension number included in the received incoming call message (S306), and transmits the incoming call message to the selected multi-function telephone 200 (S307).

Subsequently, when the incoming call message from the telephone exchange 100 is received, the control unit 208 of the multi-function telephone 200 displays, on the display unit 204, an indication of the incoming call (S308). At this occasion, display according to the originating extension number may be performed in a similar way as in the case of the incoming call.

Next, when the answer operation is performed on the destinating telephone, the telephone exchange 100 receives an answer message for the extension number of the originating multi-function telephone 200 from the destinating telephone (S309). Then, similarly to S202 and S306 in the case of the incoming call, the control unit 104 of the telephone exchange 100 refers to the registration table 102a, selects the multi-function telephone 200 associated with the originating extension number included in the received answer message (S310), and transmits the answer message to the selected multi-function telephone 200 (S311). As a result, communication (call) is enabled, and therefore the control unit 208 of the multi-function telephone 200 displays, on the display unit 204, the extension number with which the communication is enabled (S312), and the communication using the microphone 206 and the speaker 205 with the destinating telephone is initiated(S313).

As described above, in the present example embodiment, a user who wants to use an extension telephone performs personal authentication from an extension telephone such as a multi-function telephone used in an enterprise, thereby an extension number associated with the user is identified and automatic registration of the extension number as one of lines (sub-lines) of the extension telephone is enabled. In addition, extension numbers of a plurality of users who have completed personal authentication can be registered as sub-lines in one extension telephone, and thereby the one extension telephone can be shared by the plurality of users.

Note that, such data setting of an extension telephone usually requires data change by a person in charge of installation who specialized in such work, but by enabling real-time and automatic registration and deletion in the system, a flexible telephone system can be constructed that does not fix a place where a user works.

By introducing the system according to the present example embodiment, a user can use a shared multi-function telephone as if it were his/her own terminal regardless of a place where he/she works, and can secure a voice communication means. An enterprise does not need to prepare a mobile device for each person and can construct a flexible telephone system, and therefore it is possible to reduce a burden of a communication cost.

Note that, the present disclosure is not limited to the above-mentioned example embodiment, and can be modified as appropriate within a range not deviating from the scope of the present disclosure. For example, in the above example embodiment, instead of the multi-function telephone capable of accommodating a plurality of lines (sub-lines), a telephone having a similar function and sharing a soft phone operating on a personal computer or a smartphone may be used.

Each configuration in the above-described example embodiment is configured by a hardware, software, or both, and may be configured by one hardware or software, or may be configured by a plurality of hardware or software. A function (processing) of each device may be achieved by a computer having a CPU, a memory, and the like. For example, a program for performing the method according to the example embodiment (control method for the telephone switching device) may be stored in a storage device, and each function may be achieved by executing the program stored in the storage device by the CPU.

These programs may be stored by using various types of non-transitory computer readable medium and can be supplied to the computer. The non-transitory computer readable medium includes various types of tangible storage medium. Examples of the non-transitory computer readable medium include a magnetic recording medium (e.g., a flexible disk, a magnetic tape, a hard disk drive), a magneto-optical recording medium (e.g., a magneto-optical disk), a read only memory (CD-ROM), a CD-R, a CD-R/W, and a semiconductor memory (e.g., a mask ROM, a programmable ROM (PROM), erasable PROM (EPROM), Flash ROM, random access memory (RAM)). Further, the program may be supplied to the computer by various types of transitory computer readable medium. Examples of the transitory computer-readable medium include an electrical signal, an optical signal, and an electromagnetic wave. The transitory computer readable medium may supply the program to the computer via a wired or wireless communication path, such as an electrical wire and an optical fiber.

Although the present invention has been described above with reference to the example embodiment, the present invention is not limited to the above. Various modifications that can be understood by a person skilled in the art can be made to a structure and details of the present invention within the scope of the present invention.

### Reference Signs List

- 1,2: Telephone switching system
- 10: Telephone switching device
- 11: Storage unit
- 11a: Registration table
- 12: Acquisition unit
- 13: Registration unit
- 14: Control unit
- 20: Telephone terminal
- 21: Authentication unit
- 22: Acquisition unit
- 23: Setting unit
- 24: Output unit
- 100: Telephone exchange
- 101: Communication IF
- 102: Storage unit
- 102a: Registration table
- 103: Registration unit
- 104: Control unit
- 200: Multi-function telephone
- 201: Communication IF
- 202: Storage unit
- 203: Authentication unit
- 204: Display unit
- 205: Speaker
- 206: Microphone
- 207: Operation unit
- 208: Controller
- 210: Authenticated equipment
- 300: Personal authentication system
- 301: Communication IF
- 302: Storage unit
- 303: Authentication unit
- 304: Search unit
- 310: Personal database
- 400: Network

## Claims

1. A telephone switching device (10, 100) comprising:
a storage unit (11, 102) configured to store a registration table (11a, 102a) registering a plurality of personal telephone numbers for each telephone terminal (20, 200);
an acquisition unit (12, 103) configured to acquire authentication results of a plurality of users with respect to the telephone terminal (20, 200);
a registration unit (13, 103) configured to associate the telephone terminal (20, 200) and personal telephone numbers associated with respective users of the plurality of successfully authenticated users of the telephone terminal (20, 200) with each other and register the telephone terminal (20, 200) and the personal telephone numbers in the registration table (11a, 102a), according to the acquired authentication results; and
a control unit (14, 104) configured to control outgoing/incoming calls using a personal telephone number of the user in the telephone terminal (20, 200), based on the registered registration table (11a, 102a),
wherein when an incoming call to the personal telephone number in the registration table (11a, 102a) is received, the control unit (14, 104) transmits an incoming call reception request to the telephone terminal (20, 200) associated with the personal telephone number registered in the registration table (11a, 102a) and connects the incoming call to the telephone terminal by receiving an answer including the personal telephone number identified according to an authentication result of a user performing an answer operation to the telephone terminal (20, 200) from the telephone terminal (20, 200).

2. The telephone switching device (10, 100) according to Claim 1, wherein
the control unit (14, 104) receives an outgoing call origination request including the personal telephone number identified according to an authentication result of a user performing an outgoing call origination operation to the telephone terminal (20, 200) from the telephone terminal (20, 200) and transmits an incoming call reception request to a destination telephone,
when an answer to the incoming call reception request from the destinating telephone is received, the control unit (14, 104) transmits the answer to the telephone terminal (20, 200) associated with the personal telephone number registered in the registration table (11a, 102a) and connects the telephone terminal (20, 200) to the destination telephone.

3. The telephone switching device (10, 100) according to Claim 1 or 2, further comprising:
an authentication processing unit (303) configured to perform authentication processing for the user, based on authentication information of the user being input to the telephone terminal (20, 200); and
a conversion processing unit (304) configured to convert information identifying the user for which the authentication processing has succeeded into the personal telephone number,
wherein the acquisition unit (12, 103) acquires the converted personal telephone number and identification information of the telephone terminal (20, 200) as the authentication result.

4. A telephone terminal (20, 200) comprising:
an authentication unit (21, 203) configured to make authentication requests, based on input authentication information of a plurality of users of the telephone terminal (20, 200);
an acquisition unit (22, 208) configured to acquire, from a telephone switching device (10, 100) that registers personal telephone numbers associated with respective users of the plurality of users in a registration table stored the telephone switching device (10, 100) according to authentication results for the authentication requests, the authentication results for the authentication requests and the personal telephone numbers of the plurality of users;
a setting unit (23, 202) configured to set an incoming call output operation for each of the acquired plurality of personal telephone numbers;
an output unit (24, 204, 205) configured to perform an incoming call output operation according to an incoming personal telephone number, based on the set incoming call output operation; and
a control unit (208) configured to transmit an answer including the personal telephone number identified according to an authentication result of a user performing an answer operation to the incoming call output operation.

5. The telephone terminal (20, 200) according to Claim 4, wherein when an outgoing call origination request by a user is made, the control unit (208) transmits the outgoing call origination request including the personal telephone number identified according to an authentication result of the user performing the outgoing call origination operation.

6. A telephone switching system (1, 2) comprising:
the telephone switching device (10, 100) according to any one of Claims 1 to 3; and
the telephone terminal (20, 200) according to Claim 4 or 5.

7. A method for controlling a telephone switching device, comprising:
acquiring authentication results of a plurality of users with respect to the telephone terminal;
associating the telephone terminal and personal telephone numbers associated with respective users of the plurality of successfully authenticated users of the telephone terminal with each other and registering the telephone terminal and the personal telephone numbers in the registration table, according to the acquired authentication results; and
when an incoming call to the personal telephone number in the registration table is received, transmitting an incoming call reception request to the telephone terminal associated with the personal telephone number registered in the registration table and connecting the incoming call to the telephone terminal by receiving an answer including the personal telephone number identified according to an authentication result of a user performing an answer operation to the telephone terminal from the telephone terminal.

8. The method for controlling the telephone switching device according to Claim 7, further comprising:
receiving an outgoing call origination request including the personal telephone number identified according to an authentication result of a user performing the outgoing call origination operation to the telephone terminal from the telephone terminal and transmitting an incoming call reception request to a destination telephone; and
when an answer to the incoming call reception request from the destinating telephone is received, transmitting the answer to the telephone terminal associated with the personal telephone number registered in the registration table and connecting the telephone terminal to the destination telephone.

9. The method for controlling the telephone switching device according to Claim 7 or 8, further comprising:
performing authentication processing for the user, based on authentication information of the user being input to the telephone terminal;
converting information identifying the user for which the authentication processing has succeeded into the personal telephone number; and
acquiring the converted personal telephone number and identification information of the telephone terminal as the authentication result.

10. A method for controlling a telephone terminal, comprising:
making authentication requests, based on input authentication information of a plurality of users of the telephone terminal;
acquiring, from a telephone switching device that registers personal telephone numbers associated with respective users of the plurality of users in a registration table stored the telephone switching device according to authentication results for the authentication requests, the authentication results for the authentication requests and the personal telephone numbers of the plurality of users;
setting an incoming call output operation for each of the acquired plurality of personal telephone numbers;
performing an incoming call output operation according to an incoming personal telephone number, based on the set incoming call output operation; and
transmitting an answer including the personal telephone number identified according to the authentication result of a user performing an answer operation to the incoming call output operation.

11. The method for controlling the telephone terminal according to Claim 10, further comprising:
when an outgoing call origination request by a user is made, transmitting the outgoing call origination request including the personal telephone number identified according to an authentication result of the user performing the outgoing call origination operation.

12. A control program configured to cause a computer to execute the method for controlling the telephone switching device according to any one of Claims 7 to 9.

13. A control program configured to cause a computer to execute the method for controlling the telephone terminal according to Claim 10 or 11.

## Patentansprüche

1. Telefonvermittlungsvorrichtung (10, 100), die aufweist:
eine Speichereinheit (11, 102), die konfiguriert ist, eine Registrierungstabelle (11a, 102a) zu speichern, die mehrere persönliche Telefonnummern für jedes Telefonendgerät (20, 200) registriert;
eine Erfassungseinheit (12, 103), die konfiguriert ist, Authentifizierungsergebnisse von mehreren Benutzern in Bezug auf das Telefonendgerät (20, 200) zu erfassen;
eine Registrierungseinheit (13, 103), die konfiguriert ist, das Telefonendgerät (20, 200) und persönliche Telefonnummern, die mit jeweiligen Benutzern der mehreren erfolgreich authentifizierten Benutzern des Telefonendgeräts (20, 200) assoziiert sind, miteinander zu assoziieren und das Telefonendgerät (20, 200) und die persönlichen Telefonnummern in der Registrierungstabelle (11a, 102a) gemäß den erfassten Authentifizierungsergebnissen zu registrieren; und
eine Steuereinheit (14, 104), die konfiguriert ist, ausgehende/eingehende Anrufe unter Verwendung einer persönlichen Telefonnummer des Benutzers in dem Telefonendgerät (20, 200) basierend auf der registrierten Registrierungstabelle (11a, 102a) zu steuern,
wobei, wenn ein eingehender Anruf an die persönliche Telefonnummer in der Registrierungstabelle (11a, 102a) empfangen wird, die Steuereinheit (14, 104) eine Anforderung zum Empfang eines eingehenden Anrufs an das Telefonendgerät (20, 200) sendet, das mit der in der Registrierungstabelle (11a, 102a) registrierten persönlichen Telefonnummer assoziiert ist, und den eingehenden Anruf mit dem Telefonendgerät verbindet, indem sie eine Antwort einschließlich der persönlichen Telefonnummer empfängt, die gemäß einem Authentifizierungsergebnis eines Benutzers identifiziert wird, der einen Antwortvorgang an das Telefonendgerät (20, 200) von dem Telefonendgerät (20, 200) durchführt.

2. Telefonvermittlungsvorrichtung (10, 100) nach Anspruch 1, wobei
die Steuereinheit (14, 104) eine Anforderung zum Aufbau eines ausgehenden Anrufs, die die persönliche Telefonnummer enthält, die gemäß einem Authentifizierungsergebnis eines Benutzers identifiziert wird, der eine Operation zum Aufbau eines ausgehenden Anrufs zu dem Telefonendgerät (20, 200) durchführt, von dem Telefonendgerät (20, 200) empfängt und eine Anforderung zum Empfang eines eingehenden Anrufs an ein Zieltelefon sendet,
wenn eine Antwort auf die Anforderung zum Empfang eines eingehenden Anrufs von dem Zieltelefon empfangen wird, überträgt die Steuereinheit (14, 104) die Antwort an das Telefonendgerät (20, 200), das mit der in der Registrierungstabelle (11a, 102a) registrierten persönlichen Telefonnummer assoziiert ist, und verbindet das Telefonendgerät (20, 200) mit dem Zieltelefon.

3. Telefonvermittlungsvorrichtung (10, 100) nach Anspruch 1 oder 2, die ferner aufweist:
eine Authentifizierungsverarbeitungseinheit (303), die konfiguriert ist, eine Authentifizierungsverarbeitung für den Benutzer durchzuführen, basierend auf Authentifizierungsinformationen des Benutzers, die in das Telefonendgerät (20, 200) eingegeben werden; und
eine Umwandlungsverarbeitungseinheit (304), die konfiguriert ist, Informationen, die den Benutzer identifizieren, für den die Authentifizierungsverarbeitung erfolgreich war, in die persönliche Telefonnummer umzuwandeln,
wobei die Erfassungseinheit (12, 103) die umgewandelte persönliche Telefonnummer und Identifikationsinformationen des Telefonendgeräts (20, 200) als das Authentifizierungsergebnis erfasst.

4. Telefonendgerät (20, 200), das aufweist:
eine Authentifizierungseinheit (21, 203), die konfiguriert ist, Authentifizierungsanforderungen zu stellen, die auf eingegebenen Authentifizierungsinformationen von mehreren Benutzern des Telefonendgeräts (20, 200) basieren;
eine Erfassungseinheit (22, 208), die konfiguriert ist, von einer Telefonvermittlungsvorrichtung (10, 100), die persönliche Telefonnummern, die mit jeweiligen Benutzern der mehreren Benutzer assoziiert sind, in einer in der Telefonvermittlungsvorrichtung (10, 100) gespeicherten Registrierungstabelle registriert, gemäß den Authentifizierungsergebnissen für die Authentifizierungsanforderungen, die Authentifizierungsergebnisse für die Authentifizierungsanforderungen und die persönlichen Telefonnummern der mehreren Benutzer zu erfassen;
eine Einstellungseinheit (23, 202), die konfiguriert ist, eine Ausgabeoperation für eingehende Anrufe für jede der erfassten mehreren persönlichen Telefonnummern einzustellen;
eine Ausgabeeinheit (24, 204, 205), die konfiguriert ist, eine Ausgabeoperation für eingehende Anrufe gemäß einer eingehenden persönlichen Telefonnummer, basierend auf der eingestellten Ausgabeoperation für eingehende Anrufe, durchzuführen; und
eine Steuereinheit (208), die konfiguriert ist, eine Antwort zu senden, die die persönliche Telefonnummer, die gemäß einem Authentifizierungsergebnis eines Benutzers identifiziert wird, der eine Antwortoperation auf die Ausgabeoperation für eingehende Anrufe durchführt.

5. Telefonendgerät (20, 200) nach Anspruch 4, wobei, wenn eine Anforderung zum Aufbau eines ausgehenden Anrufs durch einen Benutzer gestellt wird, die Steuereinheit (208) die Anforderung zum Aufbau eines ausgehenden Anrufs einschließlich der persönlichen Telefonnummer sendet, die gemäß einem Authentifizierungsergebnis des Benutzers identifiziert wird, der die Anforderung zum Aufbau eines ausgehenden Anrufs durchführt.

6. Telefonvermittlungssystem (1, 2), das aufweist:
die Telefonvermittlungsvorrichtung (10, 100) nach einem der Ansprüche 1 bis 3; und
das Telefonendgerät (20, 200) nach Anspruch 4 oder 5.

7. Verfahren zum Steuern einer Telefonvermittlungsvorrichtung, das aufweist:
Erfassen von Authentifizierungsergebnissen von mehreren Benutzern in Bezug auf das Telefonendgerät;
Assoziieren des Telefonendgeräts und persönlicher Telefonnummern, die mit jeweiligen Benutzern der mehreren erfolgreich authentifizierter Benutzer des Telefonendgeräts assoziiert sind, und Registrieren des Telefonendgeräts und der persönlichen Telefonnummern in der Registrierungstabelle gemäß den erfassten Authentifizierungsergebnissen; und
wenn ein eingehender Anruf an die persönliche Telefonnummer in der Registrierungstabelle empfangen wird, Senden einer Anforderung zum Empfang eines eingehenden Anrufs an das Telefonendgerät, das mit der in der Registrierungstabelle registrierten persönlichen Telefonnummer assoziiert ist, und Verbinden des eingehenden Anrufs mit dem Telefonendgerät durch Empfangen einer Antwort, die die persönliche Telefonnummer enthält, die gemäß einem Authentifizierungsergebnis eines Benutzers identifiziert wird, der eine Antwortoperation an das Telefonendgerät von dem Telefonendgerät aus durchführt.

8. Verfahren zum Steuern der Telefonvermittlungsvorrichtung nach Anspruch 7, das ferner aufweist:
Empfangen einer Anforderung zum Aufbau eines ausgehenden Anrufs, die die persönliche Telefonnummer enthält, die gemäß einem Authentifizierungsergebnis eines Benutzers identifiziert wurde, der die Operation zum Aufbau eines ausgehenden Anrufs zu dem Telefonendgerät von dem Telefonendgerät aus durchführt, und Senden einer Anforderung zum Empfang eines eingehenden Anrufs an ein Zieltelefon; und
wenn eine Antwort auf die Anforderung zum Empfang eines eingehenden Anrufs von dem Zieltelefon empfangen wird, Übertragen der Antwort an das Telefonendgerät, das mit der in der Registrierungstabelle registrierten persönlichen Telefonnummer assoziiert ist, und Verbinden des Telefonendgeräts mit dem Zieltelefon.

9. Verfahren zum Steuern der Telefonvermittlungsvorrichtung nach Anspruch 7 oder 8, das ferner aufweist:
Durchführen einer Authentifizierungsverarbeitung für den Benutzer, basierend auf Authentifizierungsinformationen des Benutzers, die in das Telefonendgerät eingegeben werden;
Umwandeln von Informationen, die den Benutzer identifizieren, für den die Authentifizierungsverarbeitung erfolgreich war, in die persönliche Telefonnummer; und
Erfassen der umgewandelten persönlichen Telefonnummer und der Identifizierungsinformationen des Telefonendgeräts als das Authentifizierungsergebnis.

10. Verfahren zum Steuern eines Telefonendgerätes, das aufweist:
Stellen von Authentifizierungsanforderungen, basierend auf eingegebenen Authentifizierungsinformationen von mehreren Benutzern des Telefonendgerätes;
Erfassen von einer Telefonvermittlungsvorrichtung, die persönliche Telefonnummern registriert, die mit den jeweiligen Benutzern der mehreren Benutzer in einer Registrierungstabelle assoziiert sind, die in der Telefonvermittlungsvorrichtung gespeichert sind, gemäß den Authentifizierungsergebnissen für die Authentifizierungsanforderungen, der Authentifizierungsergebnisse für die Authentifizierungsanforderungen und der persönlichen Telefonnummern der mehreren Benutzer,
Einstellen einer Ausgabeoperation für eingehende Anrufe für jede der erfassten mehreren persönlichen Telefonnummern;
Durchführen einer Ausgabeoperation für eingehende Anrufe gemäß einer eingehenden persönlichen Telefonnummer, basierend auf der eingestellten Ausgabeoperation für eingehende Anrufe; und
Senden einer Antwort, die die persönliche Telefonnummer enthält, die gemäß dem Authentifizierungsergebnis eines Benutzers identifiziert wurde, der eine Antwortoperation auf die Ausgabeoperation für eingehende Anrufe durchführt.

11. Verfahren zur Steuerung des Telefonendgerätes nach Anspruch 10, das ferner aufweist:
wenn eine Anforderung zum Aufbau eines ausgehenden Anrufs durch einen Benutzer erfolgt, Senden der Anforderung zum Aufbau des ausgehenden Anrufs, die die persönliche Telefonnummer enthält, die gemäß einem Authentifizierungsergebnis des Benutzers identifiziert wurde, der die Operation zum Aufbau des ausgehenden Anrufs durchführt.

12. Steuerprogramm, das konfiguriert ist, einen Computer zu veranlassen, das Verfahren zum Steuern der Telefonvermittlungsvorrichtung nach einem der Ansprüche 7 bis 9 auszuführen.

13. Steuerprogramm, das konfiguriert ist, einen Computer zu veranlassen, das Verfahren zum Steuern des Telefonendgeräts nach Anspruch 10 oder 11 auszuführen.

## Revendications

1. Dispositif de commutation téléphonique (10, 100), comprenant :
une unité de mémorisation (11, 102) prévue pour mémoriser une table d'enregistrement (11a, 102a) enregistrant une pluralité de numéros de téléphone personnels pour chaque terminal téléphonique (20, 200) ;
une unité d'acquisition (12, 103) prévue pour acquérir des résultats d'authentification d'une pluralité d'utilisateurs relativement au terminal téléphonique (20, 200) ;
une unité d'enregistrement (13, 103) prévue pour associer le terminal téléphonique (20, 200) et des numéros de téléphone personnels associés aux utilisateurs respectifs de la pluralité d'utilisateurs authentifiés avec succès du terminal téléphonique (20, 200), et enregistrer le terminal téléphonique (20, 200) et les numéros de téléphone personnels dans la table d'enregistrement (11a, 102a), conformément aux résultats d'authentification acquis ; et
une unité de commande (14, 104) prévue pour commander des appels sortants/entrants utilisant un numéro de téléphone personnel de l'utilisateur dans le terminal téléphonique (20, 200), sur la base de la table d'enregistrement (11a, 102a),
où, lorsqu'un appel entrant vers le numéro de téléphone personnel dans la table d'enregistrement (11a, 102a) est reçu, l'unité de commande (14, 104) transmet une demande de réception d'appel entrant au terminal téléphonique (20, 200) associé au numéro de téléphone personnel enregistré dans la table d'enregistrement (11a, 102a), et connecte l'appel entrant au terminal téléphonique par réception d'une réponse comprenant le numéro de téléphone personnel identifié conformément à un résultat d'authentification d'un utilisateur exécutant une opération de réponse au terminal téléphonique (20, 200) à partir du terminal téléphonique (20, 200).

2. Dispositif de commutation téléphonique (10, 100) selon la revendication 1, où
l'unité de commande (14, 104) reçoit une demande de départ d'appel sortant comprenant le numéro de téléphone personnel identifié conformément à un résultat d'authentification d'un utilisateur exécutant une opération de départ d'appel sortant vers le terminal téléphonique (20, 200) à partir du terminal téléphonique (20, 200), et transmet une demande de réception d'appel entrant à un téléphone de destination,
où, lorsqu'une réponse à la demande de réception d'appel entrant provenant du téléphone de destination est reçue, l'unité de commande (14, 104) transmet la réponse au terminal téléphonique (20, 200) associé au numéro de téléphone personnel enregistré dans la table d'enregistrement (11a, 102a), et connecte le terminal téléphonique (20, 200) au téléphone de destination.

3. Dispositif de commutation téléphonique (10, 100) selon la revendication 1 ou la revendication 2, comprenant en outre :
une unité de traitement d'authentification (303) prévue pour exécuter un traitement d'authentification pour l'utilisateur, sur la base des informations d'authentification de l'utilisateur entrées dans le terminal téléphonique (20, 200) ; et
une unité de traitement de conversion (304) prévue pour convertir en numéro de téléphone personnel les informations d'identification de l'utilisateur pour lesquelles le traitement d'authentification a réussi,
où l'unité d'acquisition (12, 103) acquiert le numéro de téléphone personnel converti et les informations d'identification du terminal téléphonique (20, 200) en tant que résultat d'authentification.

4. Terminal téléphonique (20, 200), comprenant :
une unité d'authentification (21, 203) prévue pour émettre des demandes d'authentification, sur la base des informations d'authentification d'entrée d'une pluralité d'utilisateurs du terminal téléphonique (20, 200) ;
une unité d'acquisition (22, 208) prévue pour acquérir, à partir d'un dispositif de commutation téléphonique (10, 100) enregistrant des numéros de téléphone personnels associés aux utilisateurs respectifs de la pluralité d'utilisateurs dans une table d'enregistrement mémorisée dans le dispositif de commutation téléphonique (10, 100) conformément aux résultats d'authentification pour les demandes d'authentification, les résultats d'authentification pour les demandes d'authentification et les numéros de téléphone personnels de la pluralité d'utilisateurs ;
une unité de paramétrage (23, 202) prévue pour paramétrer une opération de sortie d'appel entrant pour chacun des numéros de téléphone personnels acquis ;
une unité de sortie (24, 204, 205) prévue pour exécuter une opération de sortie d'appel entrant conformément à un numéro de téléphone personnel entrant, sur la base de l'opération de sortie d'appel entrant paramétrée ; et
une unité de commande (208) prévue pour transmettre une réponse comprenant le numéro de téléphone personnel identifié conformément à un résultat d'authentification d'un utilisateur exécutant une opération de réponse à l'opération de sortie d'appel entrant.

5. Terminal téléphonique (20, 200) selon la revendication 4, où lorsqu'une demande d'émission d'appel sortant par un utilisateur est émise, l'unité de commande (208) transmet la demande d'émission d'appel sortant comprenant le numéro de téléphone personnel identifié conformément à un résultat d'authentification de l'utilisateur exécutant l'opération d'émission d'appel sortant.

6. Système de commutation téléphonique (1, 2), comprenant :
le dispositif de commutation téléphonique (10, 100) selon l'une des revendications 1 à 3 ; et
le terminal téléphonique (20, 200) selon la revendication 4 ou la revendication 5.

7. Procédé de commande d'un dispositif de commutation téléphonique, comprenant :
l'acquisition de résultats d'authentification d'une pluralité d'utilisateurs relativement au terminal téléphonique ;
l'association du terminal téléphonique et des numéros de téléphone personnels associés aux utilisateurs respectifs de la pluralité d'utilisateurs authentifiés avec succès du terminal téléphonique, et l'enregistrement du terminal téléphonique et des numéros de téléphone personnels dans la table d'enregistrement, conformément aux résultats d'authentification acquis ; et,
lorsqu'un appel entrant vers le numéro de téléphone personnel dans la table d'enregistrement est reçu, la transmission d'une demande de réception d'appel entrant au terminal téléphonique associé au numéro de téléphone personnel enregistré dans la table d'enregistrement, et la connexion de l'appel entrant au terminal téléphonique par réception d'une réponse comprenant le numéro de téléphone personnel identifié conformément à un résultat d'authentification d'un utilisateur exécutant une opération de réponse au terminal téléphonique à partir du terminal téléphonique.

8. Procédé de commande de dispositif de commutation téléphonique selon la revendication 7, comprenant en outre :
la réception d'une demande de départ d'appel sortant comprenant le numéro de téléphone personnel identifié conformément à un résultat d'authentification d'un utilisateur exécutant l'opération de départ d'appel sortant vers le terminal téléphonique à partir du terminal téléphonique, et la transmission d'une demande de réception d'appel entrant vers un téléphone de destination ; et,
lorsqu'une réponse à la demande de réception d'appel entrant provenant du téléphone de destination est reçue, la transmission de la réponse au terminal téléphonique associé au numéro de téléphone personnel enregistré dans la table d'enregistrement et la connexion du terminal téléphonique au téléphone de destination.

9. Procédé de commande de dispositif de commutation téléphonique selon la revendication 7 ou la revendication 8, comprenant en outre :
l'exécution d'un traitement d'authentification pour l'utilisateur, sur la base des informations d'authentification de l'utilisateur entrées dans le terminal téléphonique ;
la conversion en numéro de téléphone personnel des informations d'identification de l'utilisateur pour lesquelles le traitement d'authentification a réussi ; et
l'acquisition du numéro de téléphone personnel converti et des informations d'identification du terminal téléphonique en tant que résultat d'authentification.

10. Procédé de commande d'un terminal téléphonique, comprenant :
l'émission de demandes d'authentification, sur la base d'informations d'authentification d'entrée d'une pluralité d'utilisateurs du terminal téléphonique ;
l'acquisition, à partir d'un dispositif de commutation téléphonique enregistrant des numéros de téléphone personnels associés à des utilisateurs respectifs de la pluralité d'utilisateurs dans une table d'enregistrement mémorisée dans le dispositif de commutation téléphonique conformément aux résultats d'authentification pour les demandes d'authentification, des résultats d'authentification pour les demandes d'authentification et des numéros de téléphone personnels de la pluralité d'utilisateurs ;
le paramétrage d'une opération de sortie d'appel entrant pour chaque numéro de la pluralité de numéros de téléphone personnels acquis ;
l'exécution d'une opération de sortie d'appel entrant conformément à un numéro de téléphone personnel entrant, sur la base de l'opération de sortie d'appel entrant paramétrée ; et
la transmission d'une réponse comprenant le numéro de téléphone personnel identifié conformément aux résultat d'authentification d'un utilisateur exécutant une opération de réponse à l'opération de sortie d'appel entrant.

11. Procédé de commande de terminal téléphonique selon la revendication 10, comprenant en outre :
lorsqu'une demande d'émission d'appel sortant est émise par un utilisateur, la transmission de la demande d'émission d'appel sortant comprenant le numéro de téléphone personnel identifié conformément à un résultat d'authentification de l'utilisateur exécutant l'opération d'émission d'appel sortant.

12. Programme de commande, prévu pour entraîner l'exécution par un ordinateur du procédé de commande de dispositif de commutation téléphonique selon l'une des revendications 7 à 9.

13. Programme de commande, prévu pour entraîner l'exécution par un ordinateur du procédé de commande de terminal téléphonique selon la revendication 10 ou la revendication 11.
